# EUROPEAN PATENT SPECIFICATION

(11) **EP 3 159 130 B1**
(45) Date of publication and mention of the grant of the patent: **04.12.2019**
(21) Application number: 16190065.9
(22) Date of filing: 22.09.2016
(51) Int. Cl.: B29C 33/72, B29D 30/06, B08B 9/00

(54) **PRODUCTION METHOD OF COVER FOR MOLD CLEANING**
VERFAHREN ZUR HERSTELLUNG VON ABDECKUNGEN ZUR REINIGUNG VON FORMEN
PROCÉDÉ DE PRODUCTION D'UN COUVERCLE POUR NETTOYAGE DE MOULE

(30) Priority: 21.10.2015 JP 2015207203
(43) Date of publication of application: 26.04.2017
(73) Proprietor: Sumitomo Rubber Industries, Ltd., Hyogo-ken (JP)
(72) Inventor: KOIZUMI, Sadayuki, Kobe-shi Hyogo 651-0072 (JP)
(74) Representative: Manitz Finsterwald Patent- und Rechtsanwaltspartnerschaft mbB

(56) References cited:
- JP-A- 2002 137 232
- JP-A- 2011 020 416
- KR-A- 20100 064 045
- US-A- 6 096 248
- US-A1- 2007 102 083
- US-A1- 2012 067 484

## Description

### TECHNICAL FIELD

The present invention relates to a production method of a cover for mold cleaning.

### BACKGROUND OF THE INVENTION

Since molds used in vulcanization of tires are contaminated by compounding agents bloomed on a surface of a raw cover or adherence or deposition of oil content (fume) generated in heating of the raw cover and the like, a regular mold cleaning is required.

General methods for cleaning molds used in vulcanization of tires include cleaning by use of shot blast, laser or dry ice. However, in cleaning by use of shot blast or laser, a mold has to be removed from a vulcanizer after cooling and results in a problem that it takes time to cool or replace a mold. Also, in cleaning by use of dry ice, contaminants fell out from a mold may remain in the mold and the contaminants may attach to a tire prepared in the mold after cleaning.

In order to solve these problems, there is known a cleaning method which heats and presses an unvulcanized rubber composition to which cleaning components are added (unvulcanized rubber composition for mold cleaning) and removes contaminants adhered on a mold by transferring the contaminants to the rubber composition (for example, JP 2002-137232 A).

Additionally, a cleaning method which cleans a mold by making an unvulcanized rubber composition for mold cleaning into a sheet and vulcanizing a cover for mold cleaning applied on an outer periphery of a raw cover. However, since the rubber composition for mold cleaning is inferior in flexibility and low in viscosity, when a rubber sheet of the unvulcanized rubber composition for mold cleaning is applied on a raw cover, there is a problem that the rubber sheet does not follow the shape of the raw cover successfully and a gauge of the rubber sheet becomes non-uniform due to a difference in level, or air biting is generated between the rubber sheet and the raw cover. In addition, an operation of pushing the rubber sheet on the raw cover for removing air biting may also make the gauge of the rubber sheet non-uniform. As such, it is difficult to form a rubber layer for mold cleaning on the outer periphery of the raw cover in a uniform distribution. Moreover, a non-uniform or too thin gauge distribution of the rubber layer for mold cleaning results in a problem of decreasing capability of mold cleaning and currently, a mold cleaning with a cover for mold cleaning has not been put into practical use.

On the other hand, JP 2006-256385 A and US 2007/0102083 A1 disclose a manufacturing method of a tire for motorcycle in which a strip-wind method is employed for shoulder rubber portions of a tread rubber and a once-wind method is employed for a central rubber portion of the tread rubber. However, employment of these methods to a cover for mold cleaning has not been considered.

JP 2002 137232 A discloses a rubber compositions for mold cleaning of metal molds.

In KR 2010 0064045 A application of a cleaning rubber composition onto a green tire and vulcanizing the coated green tire is disclosed.

### SUMMARY OF THE INVENTION

The present invention aims to provide a production method of a cover for mold cleaning which can clean a mold without removing the mold from a vulcanizer and is excellent in a mold cleaning effect while maintaining productivity.

The present invention relates to a production method of a cover for mold cleaning produced by applying an unvulcanized rubber composition for mold cleaning on an outer periphery of a raw cover for a tire, the method comprising a rubber strip winding step of applying a rubber strip by circumferentially and spirally overlapping and winding a long narrow rubber strip consisting of the unvulcanized rubber composition for mold cleaning from side wall portions to tread shoulder portions of a raw cover for a tire, and a plate-like rubber material winding step of applying a rubber material by once-winding a wide plate-like rubber material consisting of the unvulcanized rubber composition for mold cleaning on a tread center portion of the raw cover for a tire, wherein a gauge of the rubber composition for mold cleaning after vulcanization of the cover for mold cleaning is not less than 1.0 mm.

It is preferable that the plate-like rubber material winding step is performed before the rubber strip winding step.

It is preferable that the rubber strip has a gauge of 1.0 to 3.0 mm and a width of 30 to 40 mm.

According to the present invention, it is possible to provide a production method of a cover for mold cleaning which can clean a mold without removing the mold from a vulcanizer and is excellent in a mold cleaning effect while maintaining productivity.

### DETAILED DESCRIPTION

The production method of a cover for mold cleaning of the present invention is a production method of a cover for mold cleaning produced by applying an unvulcanized rubber composition for mold cleaning on an outer periphery of a raw cover for a tire, the method comprising a rubber strip winding step of applying a rubber strip by circumferentially and spirally overlapping and winding a long narrow rubber strip consisting of the unvulcanized rubber composition for mold cleaning from side wall portions to tread shoulder portions of a raw cover, and a plate-like rubber material winding step of applying a rubber material by once-winding a wide plate-like rubber material consisting of the unvulcanized rubber composition for mold cleaning on a tread center portion of the raw cover, wherein a gauge of the rubber composition for mold cleaning after vulcanization of the cover for mold cleaning is not less than 1.0 mm.

The tread shoulder portions as used herein refer to areas of about 25% from each end of the tread portion. Also, the tread center portion as used herein refers to an area of about 50% at the center of the tread portion.

By vulcanizing the cover for mold cleaning according to the present invention with a mold to which contaminants are attached, the contaminants attached to the mold can be removed by transferring the contaminants to the rubber composition for mold cleaning.

The cover for mold cleaning according to the present invention is a cover for mold cleaning produced by applying the unvulcanized rubber composition for mold cleaning on an outer periphery of a raw cover.

The raw cover is not limited particularly as long as it can be vulcanized in a mold to be cleaned, and for example, can be obtained by extruding an unvulcanized rubber composition comprising rubber components, various compounding agents such as vulcanizing agents, fillers and the like which are conventionally used in the tire industry as necessary into shapes of respective components of the tire, and applying the rubber composition on a tire building machine through a normal method.

The rubber composition for mold cleaning is not limited particularly as long as a mold cleaning effect can be obtained and commercially available mold cleaning rubbers can be used.

Examples of the commercially available mold cleaning rubbers include W-15M, W-17M, T-726, T-726M manufactured by Lion Specialty Chemicals Co., Ltd., Struktol MC-A, MC-B manufactured by S&S Japan Co., LTD. and the like.

The production method of a cover for mold cleaning of the present invention comprises a rubber strip winding step of applying a rubber strip by circumferentially and spirally overlapping and winding a long narrow rubber strip consisting of the unvulcanized rubber composition for mold cleaning from side wall portions to tread shoulder portions of a raw cover, and a plate-like rubber material winding step of applying a rubber material by once-winding a wide plate-like rubber material consisting of the unvulcanized rubber composition for mold cleaning on a tread center portion of the raw cover, and characterized in that a gauge of the rubber composition for mold cleaning after vulcanization of the cover for mold cleaning is not less than 1.0 mm. For the sake of convenience, the formation method of spirally winding a long wide rubber strip in the rubber strip winding step may be referred to as a strip-wind (STW) method, and the formation method of once winding a plate-like rubber material in the plate-like rubber material winding step may be referred to as a once-wind method.

In each of the above steps, a device of winding a rubber strip or a plate-like rubber material in three dimensions by inflating and holding a raw cover and the like can be used.

The rubber strip winding step is a step of applying a rubber strip by spirally overlapping and winding the long narrow rubber strip consisting of the unvulcanized rubber composition for mold cleaning in the circumferential direction of the raw cover from side wall portions to tread shoulder portions of the raw cover. That is, this step is a step of applying the unvulcanized rubber composition for mold cleaning from the side wall portions to the tread shoulder portions of the raw cover through the strip-wind (STW) method.

The application of the unvulcanized rubber composition for mold cleaning from the side wall portions to the tread shoulder portions of the raw cover through the strip-wind (STW) method allows the rubber composition for mold cleaning to follow the shape of the raw cover and can prevent air biting between the rubber composition for mold cleaning and the raw cover, thereby allowing formation of a rubber layer for mold cleaning in a uniform gauge distribution. Further, since a rubber layer for mold cleaning with a sufficient gauge can be formed on the outer periphery of the raw cover, a cover for mold cleaning which exhibits an excellent mold cleaning effect can be obtained.

In the rubber strip winding step, a pair of rubber strips consisting of an unvulcanized rubber composition for mold cleaning are used, and it is preferable to apply the unvulcanized rubber composition for mold cleaning from the side wall portions to the tread shoulder portions of the raw cover by simultaneously winding these strips from bead sides of the both side wall portions toward the tread shoulder portions while partially spirally overlapping the rubber strip in the circumferential direction of the raw cover. At this time, it is preferable that the phases of the winding start and the winding end of one rubber strip are dissimilated from the winding start and the winding end of the other raw rubber strip by not less than 90° in the circumferential direction, and preferably at an angle of 180°, since a rubber layer for mold cleaning is formed in a uniform gauge distribution.

The rubber strip is preferably a long wide thin tape-like rubber strip in the form of a rectangle in cross-section having a gauge of 1.0 to 3.0 mm and a width of 30 to 40 mm, more preferably a gauge of 1.0 to 2.0 mm and a width of 30 to 35 mm.

The plate-like rubber material winding step is a step of applying a rubber material by once-winding a wide plate-like rubber material consisting of the unvulcanized rubber composition for mold cleaning on a tread center portion of the raw cover. That is, this step is a step of applying the sheet-like unvulcanized rubber composition on the tread center portion of the raw cover through the once-wind method.

Since in the tread center portion in which a change of gauge is small between before and after vulcanization, the rubber composition easily follows the shape of the tread center portion of the raw cover compared to the side wall portions and tread shoulder portions and generation of air biting is small, the preparing time of the cover for mold cleaning can be largely reduced by applying the unvulcanized rubber composition for mold cleaning on the tread center portion of the raw cover through the once-wind method, thereby allowing improvement of productivity.

While the sequence of performing the rubber strip winding step and the plate-like rubber material winding step is not limited particularly, it is preferable to perform the plate-like rubber material winding step before the rubber strip winding step since an excellent mold cleaning effect can be obtained.

The cover for mold cleaning according to the present invention can be produced by performing the rubber strip winding step and the plate-like rubber material winding step, and then performing a step of lap jointing the circumferential ends of the rubber strip on the tread shoulder portions and the plate-like rubber material and the like.

With respect to the rubber composition for mold cleaning on the outer periphery of the raw cover, the rubber composition for mold cleaning is applied on the outer periphery of the raw cover such that the gauge of the rubber composition for mold cleaning after vulcanization of the cover for mold cleaning is not less than 1.0 mm and it is preferable that the rubber composition for mold cleaning is applied such that the gauge becomes not less than 1.2 mm. If a mold is cleaned in a cover for mold cleaning in which the rubber composition for mold cleaning after vulcanization has a gauge of less than 1.0 mm, a mold cleaning effect cannot be obtained sufficiently. While an upper limit of the gauge of the rubber composition for mold cleaning after vulcanization is not limited particularly, in view of productivity, it is preferable that the rubber composition for mold cleaning is applied such that the gauge becomes not more than 3.0 mm.

The cover for mold cleaning obtained according to the production method of the present invention can remove contaminants attached on a mold by performing vulcanization with a conventional vulcanizer through a conventional method and transferring the contaminants to the rubber composition for mold cleaning.

By using the cover for mold cleaning according to the present invention in cleaning of a mold used in vulcanization of tires, it becomes possible to perform mold cleaning without removing the mold from a vulcanizer. Therefore, there is no need of cooling or replacement operation of a mold and time for mold cleaning can be reduced. In addition, since contaminants are removed by being transferred to the rubber composition for mold cleaning, the contaminants do not remain in the mold and it can prevent contaminants from attaching to a tire prepared in the mold after cleaning. Moreover, since the cover for mold cleaning according to the present invention exhibits an excellent mold cleaning effect, a number of cleaning can be reduced and vulcanization productivity of tires can be improved.

### EXAMPLE

The present invention is explained based on Examples but the present invention is not limited to Examples only.

### Examples and Comparative Examples

Raw covers of a tire for passenger car of 175/65R15 84H EC203 were inserted into a drum of a building machine and while inflating, unvulcanized rubber compositions for mold cleaning (specialty amine compounded rubber T-726M manufactured by Lion Specialty Chemicals, Co., Ltd.) were applied thereon in the sequence of a tread center portion, side wall portions and tread shoulder portions as for Example 1 and Comparative Examples 1 to 3, and in the sequence of the side wall portions, tread shoulder portions and the tread center portion as for Example 2 to obtain test covers for mold cleaning. In the formation through the strip-wind (STW) method, rubber strips having a gauge of 1.0 mm and a width of 30 mm were used.

The gauges of a cleaning rubber layer on the outer periphery of the raw cover and a preparing time of a cover for mold cleaning as described below were measured. The results are shown in Table 1.

Each of the obtained test covers for mold cleaning was vulcanized using a platen type vulcanizer to which a mold after vulcanizing 1000 tires for passenger car had been mounted under conditions of a platen temperature of 175°C, a jacket temperature of 170°C and a vulcanization time of 10 minutes, and gauges of rubber compositions for mold cleaning after vulcanization (gauge after vulcanization) were measured. Further, the following test for mold cleaning effect and overall evaluation were performed. The results are shown in Table 1.

### <Preparing time of cover for mold cleaning>

The preparing time per test cover for mold cleaning was measured. The shorter the preparing time is, the more excellent productivity of the cover for mold cleaning is. The target value for performance is a preparing time of not more than 26 minutes/cover.

### <Test for mold cleaning effect>

The molds after vulcanizing each of the test covers for mold cleaning were visually observed and evaluated according to the following criteria.
○○: The attachment of contaminants to a mold is never observed and the cleaning is performed sufficiently
○: The attachment of contaminants to a mold is slightly observed but the cleaning is performed sufficiently
Δ: The attachment of contaminants to a mold is partly observed and the cleaning is insufficient
×: The attachment of many contaminants to a mold is observed and the cleaning is insufficient

### <Overall evaluation>

Overall evaluation was performed according to the following criteria based on the evaluation results obtained from the preparing time of the cover for mold cleaning and the tests for mold cleaning effect.
○: Productivity of a mold cleaning cover satisfies the target value for performance and the cleaning is sufficient
Δ: Productivity of a mold cleaning cover does not satisfy the target value for performance or the cleaning is insufficient
×: Productivity of a mold cleaning cover does not satisfy the target value for performance and the cleaning is insufficient

**[Table 1]**

| | Comparative Example | | | Example | |
|---|---|---|---|---|---|
| | 1 | 2 | 3 | 1 | 2 |
| Tread center portion | | | | | |
| Application method | Once-wind | STW | Once-wind | Once-wind | Once-wind |
| Gauge of cleaning rubber layer | 2.0 mm | 1.0 mm | 2.0 mm | 2.0 mm | 2.0 mm |
| Gauge after vulcanization | 1.8 mm | 0.8 mm | 1.8 mm | 1.8 mm | 1.8 mm |

| Side wall portions | | | | | |
|---|---|---|---|---|---|
| Application method | Once-wind | STW | STW | STW | STW |
| Gauge of cleaning rubber layer | 2.0 mm | 2.0 mm | 1.0 mm | 2.0 mm | 2.0 mm |
| Gauge after vulcanization | 1.7 mm | 0.8 mm | 0.8 mm | 1.3 mm | 1.8 mm |

| Tread shoulder portions | | | | | |
|---|---|---|---|---|---|
| Application method | Once-wind | STW | STW | STW | STW |
| Gauge of cleaning rubber layer | 2.0 mm | 2.0 mm | 1.0 mm | 2.0 mm | 2.0 mm |
| Gauge after vulcanization | 1.8 mm | 0.8 mm | 0.8 mm | 1.8 mm | 1.8 mm |
| Mold cleaning effect | Δ | ○ | Δ | ○○ | ○ |
| Preparing time of cover for mold cleaning (/cover) | 18 min. | 30 min. | 22 min. | 25 min. | 25 min. |
| Overall evaluation | Δ | Δ | Δ | ○ | ○ |

From the results shown in Table 3, it can be found that the cover for mold cleaning produced by the production method of the present invention can clean a mold without removing the mold from a vulcanizer and is excellent in a mold cleaning effect while maintaining productivity.

## Claims

1. A production method of a cover for mold cleaning produced by applying an unvulcanized rubber composition for mold cleaning on an outer periphery of a raw cover, the method comprising
a rubber strip winding step of applying a rubber strip by circumferentially and spirally overlapping and winding a long narrow rubber strip consisting of the unvulcanized rubber composition for mold cleaning from side wall portions to tread shoulder portions of a raw cover for a tire, and
a plate-like rubber material winding step of applying a rubber material by once-winding a wide plate-like rubber material consisting of the unvulcanized rubber composition for mold cleaning on a tread center portion of the raw cover for a tire,
wherein a gauge of the rubber composition for mold cleaning after vulcanization of the cover for mold cleaning is not less than 1.0 mm.

2. The production method of a cover for mold cleaning of claim 1, wherein the plate-like rubber material winding step is performed before the rubber strip winding step.

3. The production method of a cover for mold cleaning of claim 1, wherein the rubber strip has a gauge of 1.0 to 3.0 mm and a width of 30 to 40 mm.

4. The production method of a cover for mold cleaning of claim 2, wherein the rubber strip has a gauge of 1.0 to 3.0 mm and a width of 30 to 40 mm.

## Patentansprüche

1. Herstellungsverfahren einer Abdeckung zur Formreinigung, hergestellt durch Aufbringen einer unvulkanisierten Kautschukzusammensetzung zur Formreinigung an einem Außenumfang einer Rohabdeckung, wobei das Verfahren umfasst
einen Wickelschritt eines Kautschukstreifens eines Aufbringens eines Kautschukstreifens durch umfängliches und spiralförmiges Überlappen und Wickeln eines langen schmalen Kautschukstreifens bestehend aus der unvulkanisierten Kautschukmischung zur Formreinigung von Seitenwandbereichen zu Schulterbereichen einer Rohabdeckung für einen Reifen, und
einen Wickelschritt eines plattenartigen Kautschukmaterials eines Aufbringens eines Kautschukmaterials durch einmaliges Wickeln eines breiten plattenartigen Kautschukmaterials bestehend aus der unvulkanisierten Kautschukmischung zur Formreinigung auf einen Laufflächenmittelbereich der Rohabdeckung für einen Reifen,
wobei eine Dicke der Kautschukzusammensetzung zur Formreinigung nach dem Vulkanisieren der Abdeckung zur Formreinigung nicht weniger als 1,0 mm beträgt.

2. Herstellungsverfahren einer Abdeckung zur Formreinigung nach Anspruch 1, wobei der Wickelschritt eines plattenartigen Kautschukmaterials vor dem Wickelschritt eines Kautschukstreifens durchgeführt wird.

3. Herstellungsverfahren einer Abdeckung zur Formreinigung nach Anspruch 1, wobei der Kautschukstreifen eine Dicke von 1,0 bis 3,0 mm und eine Breite von 30 bis 40 mm aufweist.

4. Herstellungsverfahren einer Abdeckung zur Formreinigung nach Anspruch 2, wobei der Kautschukstreifen eine Dicke von 1,0 bis 3,0 mm und eine Breite von 30 bis 40 mm aufweist.

## Revendications

1. Procédé de production d'une couverture pour nettoyage de moule produite en appliquant une composition de caoutchouc non vulcanisé pour nettoyage de moule sur une périphérie extérieure d'une couverture brute, le procédé comprenant
une étape d'enroulement d'un ruban en caoutchouc consistant à appliquer un ruban en caoutchouc en enroulant et en disposant en chevauchement circonférentiellement et en spirale un long ruban en caoutchouc étroit constitué de la composition de caoutchouc non vulcanisé pour nettoyage de moule depuis des portions de parois latérales jusqu'à des portions d'épaulement de la bande de roulement d'une couverture brute pour un pneumatique, et
une étape d'enroulement d'un matériau en caoutchouc semblable à une plaque consistant à appliquer un matériau en caoutchouc en enroulant une fois un matériau en caoutchouc large semblable à une plaque constituée de la composition de caoutchouc non vulcanisé pour nettoyage de moule sur une portion centrale de la bande de roulement de la couverture brute pour un pneumatique,
dans lequel une épaisseur de la composition de caoutchouc pour nettoyage de moule après vulcanisation de la couverture pour nettoyage de moule n'est pas inférieure à 1,0 mm.

2. Procédé de production d'une couverture pour nettoyage de moule selon la revendication 1, dans lequel l'étape d'enroulement d'un matériau en caoutchouc semblable à une plaque est exécutée avant l'étape d'enroulement d'un ruban en caoutchouc.

3. Procédé de production d'une couverture pour nettoyage de moule selon la revendication 1, dans lequel le ruban en caoutchouc a une épaisseur de 1,0 à 3,0 mm et une largeur de 30 à 40 mm.

4. Procédé de production d'une couverture pour nettoyage de moule selon la revendication 2, dans lequel le ruban en caoutchouc a une épaisseur de 1,0 à 3,0 mm et une largeur de 30 à 40 mm.
